(19) Europäisches Patentamt
European Patent Office
Office européen des brevets

(11) **EP 2 538 826 B1**

## (12) EUROPÄISCHE PATENTSCHRIFT

(45) Veröffentlichungstag und Bekanntmachung des Hinweises auf die Patenterteilung:
**30.04.2014 Patentblatt 2014/18**

(21) Anmeldenummer: **11703189.8**

(22) Anmeldetag: **03.02.2011**

(51) Int Cl.:
***A47J 31/52*** *(2006.01)*

(86) Internationale Anmeldenummer:
**PCT/EP2011/051518**

(87) Internationale Veröffentlichungsnummer:
**WO 2011/101251 (25.08.2011 Gazette 2011/34)**

(54) **VERFAHREN ZUR BERÜCKSICHTIGUNG VON SPANNUNGSSCHWANKUNGEN BEI HAUSHALTSGERÄTEN UND VORRICHTUNG DAFÜR**

METHOD FOR PROVIDING FOR VARIATIONS IN VOLTAGE FOR HOUSEHOLD APPLIANCES AND DEVICE THEREFOR

PROCÉDÉ DE PRISE EN COMPTE DES FLUCTUATIONS DE TENSION SUR DES APPAREILS MÉNAGERS ET DISPOSITIF À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2010 DE 102010002170**

(43) Veröffentlichungstag der Anmeldung:
**02.01.2013 Patentblatt 2013/01**

(73) Patentinhaber: **BSH Bosch und Siemens Hausgeräte GmbH 81739 München (DE)**

(72) Erfinder:
• **BOEHM, Dirk**
**85591 Vaterstetten (DE)**
• **GERL, Ulrike**
**83278 Traunstein (DE)**

(56) Entgegenhaltungen:
**EP-A1- 2 074 916          WO-A1-2007/002575
DE-A1-102007 053 253**

## Beschreibung

Die Erfindung betrifft ein Verfahren zum Kompensieren von Spannungsschwankungen beim Betrieb eines netzgespeisten elektrischen Haushaltsgeräts mit einem Anschluss zu einer Spannungsquelle und mit einem elektrischen Verbraucher. Die Erfindung betrifft außerdem ein Verfahren zum Ermitteln eines Verbraucherverhaltens und ein elektrisches Haushaltsgerät, bei dem das Verfahren zur Anwendung kommt.

Der Verbraucher ist ein Bestandteil des Haushaltsgeräts, das im Betrieb mit Strom aus der Spannungsquelle versorgt wird, also einer von eventuell mehreren Stromverbrauchern. Ein Verbraucher eines Haushaltsgeräts kann eine Pumpe sein. Aus der WO 2007/002575 A1 ist ein Verfahren zum Kalibrieren einer Pumpe in einem Getränkegerät bekannt. Dabei wird die Pumpe zu Kalibrierungszwecken betrieben. Im Betrieb wird eine Leistungscharakteristik der Pumpe gemessen. Basierend auf der Leistungscharakteristik wird ein Betriebsindex zugewiesen. Der Betriebsindex ist für den nachfolgenden Betrieb der Pumpe verwendbar.

Ein Verfahren beim der Betrieb eines netzgespeisten Haushaltsgeräts bei Spannungsschwankungen optimiert werden kann, ist aus der Patentanmeldung EP 2 074 916 A1 bekannt. In dem Verfahren soll ein Verbraucher mit konstanter Spannung - d.h. bei konstanter Leistungsabgabe - betrieben werden, wobei unvorhergesehen auftretende Spannungsschwankungen des Versorgungsnetzes mittels einer geeigneten Widerstandsschaltung abgemildert werden sollen.

Der Erfindung liegt die Aufgabe zugrunde, ein Verfahren bereitzustellen, bei dem Spannungsschwankungen beim Betrieb eines netzgespeisten Haushaltsgeräts besser berücksichtigt werden.

Diese Aufgabe wird bei einem eingangs genannten Verfahren erfindungsgemäß dadurch gelöst, dass im Betrieb bei eingeschaltetem Verbraucher ein aktueller Spannungswert der Spannungsquelle ermittelt und unter Verwendung eines werkseitig individuell bestimmten Verbraucher-Widerstandswerts die mit dem aktuelle Spannungswert erzielbare Leistung des Verbrauchers berechnet und daraufhin an den Bedarf angepasst wird. Spannungswerte einer Spannungsquelle, vor allem des öffentlichen Stromnetzes können bekanntlich schwanken. Daraus können sich schwankende Leistungen und unerwünschte Ergebnisse am Haushaltsgerät ergeben, was vor allem bei einer Getränkezubereitung störend ist. Daher wird ein aktueller Spannungswert der Spannungsquelle erfasst. Der Verbraucher-Widerstandswert ist kein herstellerseitig angegebener Sollwert, der regelmäßig mit Toleranzen von bis zu 10% behaftet ist, sondern wird bereits werkseitig individuell für den jeweiligen und ggf. jeden Verbraucher des Haushaltsgeräts ermittelt. Erfindungsgemäß wird also bei der Benutzung des Haushaltsgeräts ein aktueller Spannungswert $U$ bei eingeschaltetem Verbraucherstrom $I_L$ ermittelt und unter Verwendung des tatsächlichen Verbraucher-Widerstandswerts $R_L$ die mit dem Verbraucher erzielbare Leistung gemäß folgender Gleichung berechnet:

$$P = U^2 / R_L \qquad \text{(Formel 1)}$$

Damit werden also nicht nur Leistungsabweichungen des Haushaltsgeräts infolge produktionsbedingter Toleranzen im Verbraucher-Widerstandswert $R_L$ ausgeschlossen. Da die Spannung quadratisch in die Berechnung der Leistung $P$ eingeht, kann es bei Unkenntnis der aktuellen Spannung zu erheblichen Abweichungen von einem gewünschten Ergebnis bzw. einer mit dem Verbraucher zu erzielenden Wirkung kommen. Die Erfindung entschärft dieses Problem, weil der Verbraucher-Widerstandswert $R_L$ genau bekannt ist und die dem Verbraucher zur Verfügung stehende Spannung zum Leistungszeitpunkt ermittelt wird und daraufhin die Wirkung bzw. die Betriebsdauer des Verbrauchers an den vorliegenden Bedarf angepasst werden kann. Ist die Leistung des Verbrauchers wegen seines Widerstandswerts und zusätzlich wegen aktuell geringerer Spannung für ein zufrieden stellendes Ergebnis des Haushaltsgeräts zu gering, kann daher die Betriebsdauer des Verbrauchers erhöht werden, um das gewünschte Ergebnis zu erzielen.

Bei einem Getränkegerät als Haushaltsgerät z.B. ist für die Herstellung eines optimalen Getränks u.a. die Temperatur der Flüssigkeit wichtig. Ein relevanter Verbraucher ist die Heizung und der Verbraucherwiderstand ist deren Heizwiderstandswert $R_L$. Erfindungsgemäß kann im Betrieb bei eingeschalteter Heizung direkt der Spannungswert $U$ der Netzspannung mit Hilfe einer Sensorstufe des Haushaltsgeräts gemessen werden. Unter Kenntnis des tatsächlichen Heizwiderstandswerts $R_L$ kann gemäß der Formel 1 unmittelbar auf die zur Verfügung stehende Heizleistung $P$ geschlossen werden. Durch eine geeignete Wahl der Heizdauer kann die Getränketemperatur gut und zuverlässig kontrolliert werden. Durch die Messung des Spannungswerts $U$ und des werksseitig bestimmten Verbraucher-Widerstandswerts $R_L$ treten keine Abweichungen von einer Soll-Getränketemperatur mehr auf. Die exakte Kenntnis der erzielbaren elektrischen Leistung erlaubt also die Erzeugung des Getränks mit der gewünschten Qualität.

Für dieses Arbeitsverfahren ist die Kenntnis des Verbraucher-Widerstandswerts $R_L$ erforderlich. Er kann grundsätzlich werkseitig vorab an jedem Verbraucher separat bestimmt werden. Erfindungsgemäß kommt jedoch ein Verfahren zur Ermittlung des Verhaltens des elektrischen Verbrauchers zum Einsatz, bei dem der Innenwiderstand $R_I$ einer Spannungsquelle ermittelt, eine aktuelle Spannung zur elektrischen Versorgung des Verbrauchers abgegriffen, ein Verbraucherstrom $I_L$ durch den Verbraucherwiderstand ein- bzw. ausgeschaltet und dabei ein erster Spannungswert $U_1$ bei ausgeschaltetem Verbraucherstrom $I_L$ und ein zweiter Spannungswert $U_2$ bei eingeschaltetem Verbraucherstrom $I_L$ ermittelt wird. Der Verbraucher-Widerstandswert $R_L$ des Verbraucherwiderstands wird dann aus dem ersten Spannungs-wert $U_1$ und dem zweiten Spannungswert $U_2$ und dem Innenwiderstandswert $R_I$ der Spannungsquelle berechnet.

Im Gegensatz zu dem bekannten Haushaltsgerät erfolgt also keine Kalibrierung bei der ein Betriebsindex ermittelt wird. Ein solcher Betriebsindex stellt nämlich nur eine oberflächliche bzw. empirische Parametrisierung des Verhaltens eines elektrischen Verbrauchers dar. Erfindungsgemäß wird nun der Verbraucher-Widerstandswert $R_L$ genau ermittelt. Dies geschieht aber nicht in einer separaten Messung des Verbrauchers vor dessen Einbau während der Herstellung des Haushaltsgeräts, weil die Messung, die Zuordnung des gemessenen Werts und dessen Berücksichtigung in der Steuerung einen erheblichen Aufwand darstellen würde. Erfindungsgemäß wird der Widerstandswert $R_L$ erst auf einem Endprüfstand, in dem das Haushaltsgerät nach seiner Herstellung endgeprüft wird, ermittelt. Dabei wird der Innenwiderstandswert $R_I$ des Innenwiderstands der externen Spannungsquelle verwendet. Denn die Leistungsdaten der Spannungsquelle eines Endprüfstands sind im Gegensatz zu denjenigen des öffentlichen Versorgungsnetzes bekannt oder zumindest ermittelbar. Das Haushaltsgerät wird dort mit der Spannungsquelle verbunden und mit einer z.B. 50 Hz-Wechselspannung mit 220V oder mit einer 60 Hz-Wechselspannung mit 120V versorgt.

Das Ermitteln der beiden Spannungswerte $U_1$ und $U_2$ sowie das Berechnen des Verbraucher-Widerstandswerts $R_L$ bei der Endprüfung kann außerhalb oder innerhalb des Haushaltsgeräts erfolgen. Der berechnete Verbraucher-Widerstandswert $R_L$ wird jedenfalls im Haushaltsgerät gespeichert. Soll die werksseitige Bestimmung des Verbraucher-Widerstandswerts $R_L$ innerhalb des Haushaltsgeräts stattfinden, kann wie folgt vorgegangen werden. In dem Haushaltsgerät können Schaltungspunkte, zwischen denen die Versorgungsspannung abgreifbar ist, durch Anschlussklemmen des Haushaltsgeräts gebildet sein. Alternativ können dazu auch die Anschlüsse des Verbraucherwiderstands selbst oder die Anschlüsse der Schaltstufe dienen. Bei der Wahl der Schaltungspunkte ist lediglich zu beachten, dass bei einem Übergang zwischen eingeschaltetem und ausgeschaltetem Verbraucherstrom eine durch den Innenwiderstand der Spannungsquelle verursachte Änderung des Spannungswerts zwischen diesen Schaltungspunkten messbar ist.

Zum Abgreifen der Spannung kann eine Sensorstufe zum Einsatz kommen, die eingangseitig mit den beiden Schaltungspunkten gekoppelt ist. Die Sensorstufe kann mit Hilfe einer Widerstandsmessbrücke realisiert sein. Es können auch weitere elektronische Komponenten, wie beispielsweise Messverstärker, Spannungsteiler oder induktive Wandler usw. vorhanden sein, um ausgangsseitig ein analoges Sensorsignal zu erzeugen, das in dem Haushalsgerät weiterverarbeitet werden kann. Auch kann bereits in der Sensorstufe ein Analog-Digitalwandler integriert sein, um ein digitales Sensorsignal zu erhalten.

Zum Ein- und Ausschalten des Verbraucherstroms wird eine Schaltstufe verwendet. Sie kann aus einem oder mehreren Transistoren oder einem Relais als Schaltelement bestehen. Der Steuerstufe wird ein Steuersignal zur Steuerung ihres Schaltzustands zugeführt. Zur Ansteuerung ihrer Schaltelemente kann die Schaltstufe auch eine Treiberelektronik aufweisen, die mit dem Steuersignal direkt gespeist wird und ihrerseits dann das jeweilige Schaltelement ansteuert.

Die Steuerstufe zum Steuern der Schaltstufe und zum Ermitteln des Spannungswerts kann ein Mikrocontroller bilden. Auf dem Mikrocontroller wird ein Programm abgearbeitet, das die Funktionen der Steuerstufe abbildet. Eine Arithmetic-Logic-Unit und ein Registersatz leisten Berechnungen und Vergleiche in dem Mikrocontroller, die Funktionen der Streuerstufe bilden. Das Programm ist in einem internen permanenten Speicher (z.B. ROM) des Mikrocontrollers gespeichert, von wo es bei der Ausführung abgerufen wird. Ein nichtflüchtiger Speicher (z.B. EEPROM) des Mikrocontrollers stellt eine erste Speicherstufe dar, die den Innenwiderstandswert $R_I$ bereits ab Werk speichert. Der Mikrocontroller weist einen Eingang zum Empfangen des Sensorsignals auf. Der Mikrocontroller kann auch einen Analog/Digitalwandler aufweisen, der zur Ermittlung der Spannungswerte verwendet wird. Auch die Sensorstufe kann Teil des Mikrocontrollers sein, z.B. in einer hybriden Form. Die Steuerstufe kann jedoch auch durch einen Mikroprozessor realisiert sein, der über einen externen Bus mit umliegenden Peripheriebausteinen wie beispielsweise Speicherbausteinen, einem Analog-Digitalwandler oder anderen Schnittstellenbausteinen zur Kommunikation von Informations- bzw. Steuersignalen usw. verbunden ist. Sie kann basierend auf Programmable-Logic-Array-Technologie und dergleichen realisiert werden. Neben einer volldigitalen kann auch eine semidigitale Realisierung verwendet werden.

Bei der Ausführung des Verfahrens wird zur Bestimmung des Verbraucher-Widerstandswerts $R_L$ erfindungsgemäß eine geräteinterne Spannungsmessung mit abgeschaltetem Verbraucher durchgeführt, bei der ein erster Span-nungswert $U_1$ ermittelt wird. Es erfolgt eine weitere geräteinterne Spannungsmessung mit eingeschaltem Verbraucher, bei der ein zweiter Spannungswert $U_2$ ermittelt wird. Der zweite Spannungswert $U_2$ entspricht der Spannung, die an dem Verbraucherwiderstand anliegt, wenn ein Verbraucherstrom $I_L$ durch ihn und den Innenwiderstand $R_I$ fließt. Aus diesen beiden Messungen wird ein Differenzspannungswert dU berechnet: $dU = U_1 - U_2$. Wegen der Serienschaltung des Innenwiderstands und des Verbraucherwiderstands fällt eine Spannung mit dem Differenzspannungswert dU an dem Innenwiderstand ab. Die beiden Spannungswerte $U_1$ und $U_2$ können auch in umgekehrter Reihenfolge ermittelt werden.

Es wird nun der unbekannte Verbraucher-Widerstandswert $R_I$ wie folgt berechnet, wobei folgende Gleichung den Ausgangspunkt bildet:

$$U_2 = U_1 - dU \qquad \text{(Formel 2)}$$

Gemäß dem Ohmschen Gesetz gilt $U_2 = R_L \cdot I_L$. Laut Kirchhoffscher Maschenregel ist der Verbraucherstrom $I_L$ gleich groß wie der Innenwiderstandsstrom $I_{RI}$ durch den Innenwiderstand $R_I$, es gilt *also* $I_L = I_{RI}$. Somit erhält man für $I_L = dU/R_I$ und es folgt $U_2 = R_L \cdot dU/R_I$. Dies in Formel 2 eingesetzt liefert folgende Gleichung:

$$R_L \cdot dU/R_I = U_1 - dU \qquad \text{(Formel 3)}$$

Umformen der Formel 3 liefert schließlich die zur Berechnung des Verbraucher-Widerstandswerts $R_L$ benötiget Gleichung:

$$R_L = \left( \frac{U_1 - dU}{dU} \right) R_I \qquad \text{(Formel 4)}$$

Der Verbraucher-Widerstandswert $R_L$ wird also auf analytische Weise mit Hilfe der beiden geräteintern bestimmten Spannungswerte und des bekannten Innenwiderstandswerts $R_I$ berechnet.

Ein weiterer Aspekt der Erfindung betrifft Zeitpunkt bzw. Ort der Ermittlung des Verbraucher-Widerstandswerts $R_L$. Gemäß einer bevorzugten Ausführungsform der Erfindung wird in dem Haushaltsgerät zwischen einem Prüfbetriebszustands und einem Normalbetriebszustands unterschieden. Der Prüfbetriebszustand kommt als ein Teil eines Herstellungsverfahrens bei einem Prüfen des Haushaltsgeräts z. B. bei einer Endprüfung auf dem Endprüfstand zur Anwendung. Der Verbraucher-Widerstandswert $R_L$ wird nur während des Prüfbetriebszustands berechnet. Der Normalbetriebszustand liegt bei einer Benutzung des Haushaltsgeräts durch einen Benutzer vor.

Die Unterscheidung der beiden Zustände kann durch einen Bitwert eines Zustandsbits in dem EEPROM erfolgen. Bei der Produktion des Haushaltsgeräts wird ein erster Bitwert festgelegt. Das Haushaltsgerät wird erstmals bei dem Endprüfstand in Betrieb genommen. Dort startet das Programm und prüft zunächst den Bitwert. Bei der Prüfung wird der erste Bitwert erkannt und es wird das Verfahren zur Ermittlung des Verbraucher-Widerstandswert $R_L$ gestartet. Nach erfolgter Berechnung des Verbraucher-Widerstandswert $R_L$ wird der Bitwert verändert. Bei einer neuerlichen Inbetriebnahme bei einem Benutzer erkennt das Programm den veränderten Bitwert und schaltet das Haushaltsgerät auf den Normalbetriebszustand. Der im vorhergehenden Absatz erörterte Vorteil eines EEPROM gegenüber einem PROM hat auch hier Gültigkeit.

Der jeweilige Zustand kann z.B. auch durch eine Drahtbrücke bestimmt werden. Nach erfolgter Berechnung des Verbraucher-Widerstandswerts $R_L$ kann sie vom Prüfpersonal oder automatisch durchtrennt werden. Der Mikrocontroller kann den Zustand der Drahtbrücke erfassen und den entsprechenden Betriebszustand festlegen.

Gemäß einem weiteren Aspekt der Erfindung wird der berechnete Verbraucher-Widerstandwert in dem Haushaltsgerät gespeichert. Vorteilhafterweise ist er dann auch für eine zukünftige Verwendung verfügbar. Er kann in einer zweiten Speicherstufe gespeichert werden, z.B. im EEPROM. Ebenso kann dafür ein Programmable-Read-Only-Memory (PROM) verwendet werden. Das EEPROM hat jedoch den Vorteil, dass in einem Servicefall - beispielsweise bei einem Austausch eines schadhaften Verbrauchers - der Verbraucher-Widerstandswert $R_L$ erneut gespeichert werden kann. Bei dem PROM ist dies nur ein einziges Mal möglich.

Die oben genannte Aufgabe wird bei einem Haushaltsgerät der Eingangs genannten Art dadurch gelöst, dass eine Speicherstufe den werkseitig bestimmten Verbraucher-Widerstandswert speichert, und dass die Steuerstufe zum Ermitteln eines aktuellen Spannungswerts bei eingeschaltetem Verbraucherstrom und unter Verwendung des werkseitig bestimmten Verbraucher-Widerstandswerts und des aktuelle Spannungswerts zum Berechnen der mit dem Verbraucher erzielbare Leistung ausgebildet ist.

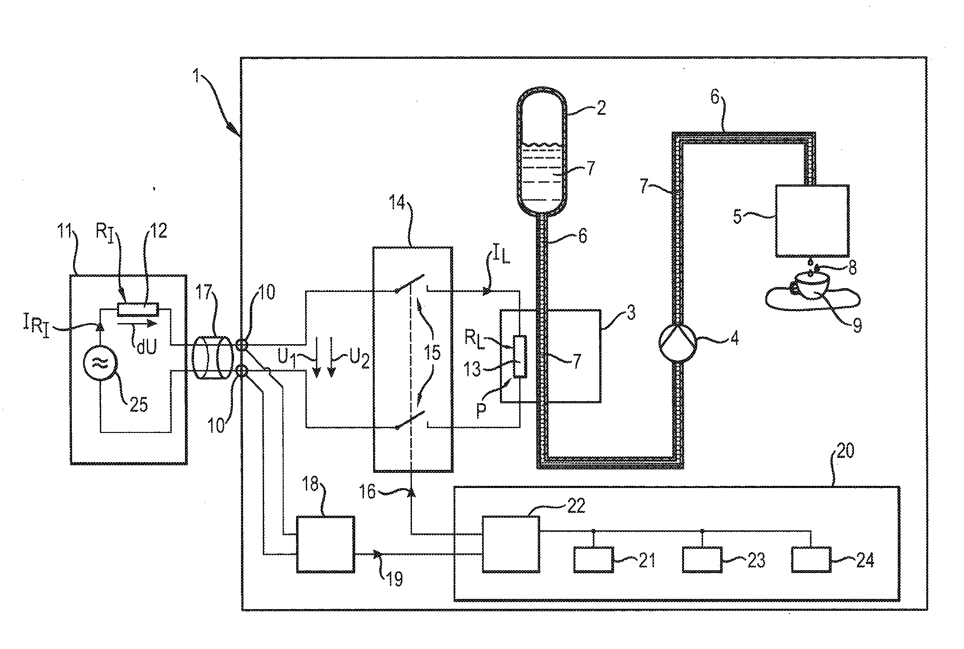

Das Prinzip der Erfindung wird im Folgenden anhand einer Zeichnung beispielshalber noch näher erläutert. Die einzige Figur der Zeichnung zeigt ein Blockschaltbild einer Kaffeemaschine als Haushaltsgerät.

Das Haushaltsgerät, nachfolgend Getränkegerät 1 genannt, hat einen Wasserbehälter 2, eine Heizung 3, eine Pumpe 4 und eine Brühkammer 5, die ein Leitungssystem 6 verbindet. Im Betrieb pumpt die Pumpe 4 Wasser 7 aus dem Wasserbehälter 2 durch die Heizung 3, wo es erhitzt wird. Von dort gelangt es in die Brühkammer 5, wo Brühgut (nicht dargestellt) gebrüht wird. Das fertige Getränk 8 wird stromab der Brühkammer 5 in eine Tasse 9 abgegeben.

Das Getränkegerät 1 befindet sich bei seiner Endprüfung auf einem Endprüfstand. Dort wird ein Heizwiderstandwert $R_L$ eines Heizwiderstands 13 der Heizung 3 nach dem erfindungsgemäßen Verfahren bestimmt. Über ein Kabel 17, das an zwei Anschlüssen 10 befestigt ist und in einem Netzstecker endet (nicht dargestellt), ist das Getränkegerät 1 an eine Spannungsquelle 11 angeschlossen. Sie generiert eine 50-Hz-Wechselspannung mit 220V für das Getränkegerät 1. Von der Spannungsquelle 11 sind nur der Innenwiderstand 12 und ein Spannungsgenerator 25 dargestellt. Die Spannungsquelle 11 wird aus einem herkömmlichen elektrischen Versorgungsnetz versorgt (nicht dargestellt).

Mit den Anschlüssen 10 sind auch Arbeitskontakte 15 einer als Relais 14 ausgeführten Schaltstufe verbunden. Der Heizwiderstand 13 ist an die Arbeitskontakte 15 des Relais' 14 angeschlossen.

Das Getränkegerät 1 weist einen Mikrocontroller 20 auf. In einem Read-Only-Memory (ROM) 21 ist ein Programm gespeichert. In einem Electrically-Erasable-Programmable-ROM (EEPROM) 23 ist der Innenwiderstandswert $R_I$ sowie ein erster Bitwert gespeichert, der anzeigt, dass sich das Getränkegerät 1 in einem Prüfbetriebszustand befindet.

Das Getränkegerät 1 wird auf dem Endprüfstand zum ersten Mal gestartet. Dadurch startet auch eine Abarbeitung des Programms. Der Mikrocontroller 20 bzw. eine durch das Abarbeiten des Programms gebildete Steuerstufe 22 prüft zunächst das Zustandsbit und erkennt, dass der Prüfbetriebszustand vorliegt.

Daraufhin werden alle schaltbaren Verbraucher wie z.B. die Pumpe 4 abgeschaltet. Zum Abschalten der Heizung 3 wird ein Steuersignal 16 mit einem ersten Signalzustand von dem Mikrocontroller 20 an das Relais 14 abgegeben, sodass die Arbeitskontakte 15 offen sind und kein Verbraucherstrom $I_L$ durch den Heizwiderstand 13 fließt. Danach wird von einer Sensorstufe 18, die eingangsseitig mit den Anschlüssen 10 verbunden ist, ein Sensorsignal 19 generiert. Das Sensorsignal 19 wird von dem Mikrocontroller 20 eingelesen. Es repräsentiert die Spannung zwischen den Anschlüssen 10. Sodann ermittelt die Steuerstufe 22 daraus einen ersten Spannungswerts $U_1$ und speichert ihn im RAM 24.

Nun wird die Heizung 3 eingeschaltet. Dazu wird das Steuersignal 16 mit einem zweiten Signalzustand an das Relais 14 abgegeben, sodass die Arbeitskontakte 15 geschlossen sind und der Verbraucherstrom $I_L$ durch den Heizwiderstand 13 fließt. Das Sensorsignal 19 wird erneut eingelesen und ein zweiter Spannungswert $U_2$ ermittelt. Auch dieser wird in dem RAM 24 gespeichert.

In einem nächsten Schritt werden die Spannungswerte $U_1$ und $U_2$ zur Berechnung eines Differenzspannungswerts dU verwendet, der einem Spannungseinbruch entspricht, den das Einschalten der Heizung 3 verursacht. Danach wird der gespeicherte Innenwiderstandswert $R_I$ aus dem EEPROM ausgelesen und gemäß der Formel

$$R_L = \left( \frac{U_1 - dU}{dU} \right) R_I \qquad \text{(Formel 4)}$$

der Heizwiderstandswert $R_L$ berechnet. Der Heizwiderstandswert $R_L$ wird in dem EEPROM 23 gespeichert. Danach wird der Prüfbetriebszustand durch ein Verändern des Bitwerts des Zustandsbits verlassen. Das erfindungsgemäße Verfahren steht somit nur bei einem Prüfbetriebszustand, also bei der Endkontrolle zur Verfügung.

Im Betrieb des Getränkegeräts 1 bei einem Benutzer ist das Getränkegerät 1 an ein öffentliches elektrisches Versorgungsnetz angeschlossen, das als Versorgungsspannung eine 50 Hz Wechselspannung mit 220V bereitstellt. Beim Start des Getränkegerätes 1 stellt die Steuerstufe 22 durch ein Prüfen des Bitwerts den Normalbetriebszustand fest. In diesem Zustand liest die Steuerstufe 22 den gespeicherten Heizwiderstandswert $R_L$ aus dem EEPROM 23 aus. Es wird der Verbraucherstrom $I_L$ durch den Heizwiderstand 13 eingeschaltet und ein Spannungswert der an den Anschlüssen 10 abfallenden Spannung ermittelt. Nun wird die tatsächlich zur Verfügung stehende Leistung gemäß der Formel

$$P = U^2 / R_L \qquad \text{(Formel 1)}$$

berechnet. Daraus ermittelt die Steuerstufe 22 die benötigte Heizdauer, um eine gewünschte Temperatur des zu erzeugenden Getränks 8 zu erhalten und belässt die Heizung 3 für diese Heizdauer in dem eingeschalteten Zustand.

Da es sich bei der vorhergehenden, detailliert beschriebenen Figur um ein Ausführungsbeispiel handelt, kann dieses in üblicher Weise vom Fachmann in einem weiten Umfang modifiziert werden, ohne den Bereich der Erfindung zu verlassen. Insbesondere kann auch die Ermittlung des Verbraucher-Widerstandswerts der Pumpe in der hier beschriebenen Art und Weise erfolgen. Weiterhin schließt die Verwendung der unbestimmten Artikel "ein" bzw. "eine" nicht aus, dass die betreffenden Merkmale auch mehrfach vorhanden sein können.

Bezugszeichenliste

| | | | |
|---|---|---|---|
| 1 | Getränkegerät | 18 | Sensorstufe |
| 2 | Wasserbehälter | 19 | Sensorsignal |
| 3 | Heizung | 20 | Mikrocontroller |
| 4 | Pumpe | 21 | ROM |
| 5 | Brühkammer | 22 | Steuerstufe |
| 6 | Leitungssystem | 23 | EEPROM |
| 7 | Wasser | 24 | RAM |
| 8 | Getränk | 25 | Spannungsgenerator |
| 9 | Tasse | $R_I$ | Innenwiderstandswert |
| 10 | Anschlüsse | $R_L$ | Heizwiderstandswert |
| 11 | Spannungsquelle | $U_1$ | erste Spannungswert |
| 12 | Innenwiderstand | $U_2$ | zweiter Spannungswert |
| 13 | Heizwiderstand | dU | Differenzspannungswert |
| 14 | Schaltstufe | $I_L$ | Verbraucherstrom |
| 15 | Arbeitskontakte | P | Leistung |
| 16 | Steuersignal | $I_{RI}$ | Innenwiderstandsstrom |
| 17 | Kabel | | |

**Patentansprüche**

**1.** Verfahren zum Kompensieren von Spannungsschwankungen belm Betrieb eines netzgespeisten elektrischen Haushaltsgeräts (1) mit einem Anschluss zu einer Spannungsquelle und mit einem elektrischen Verbraucher (3), wobei im Betrieb bei eingeschaltetem Verbraucher (3) ein aktueller Spannungswert der Spannungsquelle ermittelt wird, **dadurch gekennzeichnet, dass** unter Verwendung eines werkseitig individuell bestimmten Verbraucher-Widerstandswerts ($R_L$) die mit dem aktuellen Spannungswert erzielbare Leistung des Verbrauchers (3) berechnet wird.

**2.** Verfahren zum Ermitteln eines Verhaltens eines Verbrauchers (3) mit einem Verbraucherwiderstand (13) In einem elektrischen Haushaltsgerät (1), zur Bestimmung eines Verbraucher-Widerstandswerts ($R_L$), mit folgenden Schritten:

- Abgreifen einer Spannung zur elektrischen Versorgung des Verbrauchers (3),
- Ein- und Ausschalten eines Verbraucherstroms ($I_L$), der durch den Verbraucherwiderstand (13) fließt,
- Ermitteln eines Spannungswerts der Spannung einer Spannungsquelle (11), **dadurch gekennzeichnet, dass**
- ein Innenwiderstand ($R_I$) der Spannungsquelle (11) ermittelt wird,
- ein erster Spannungswert ($U_1$) bei ausgeschaltetem Verbraucherstrom ($I_L$) und ein zweiter Spannungswert ($U_2$) bei eingeschaltetem Verbraucherstrom ($I_L$) ermittelt wird, und
- ein Verbraucher-Widerstandswert ($R_L$) des Verbraucherwlderstands (13) aus dem ersten Spannungswert ($U_1$) und dem zweiten Spannungswert ($U_2$) und dem Innenwiderstandswert ($R_I$) berechnet wird.

**3.** Verfahren nach Anspruch 2, **dadurch gekennzeichnet, dass** der Verbraucherwiderstandswert ($R_L$) gemäß der Gleichung

$$R_L = \left( \frac{U_1 - dU}{dU} \right) R_I$$

berechnet wird, wobei dU ein Differenzspannungswert zwischen dem ersten Spannungswert $U_1$ und dem zweiten Spannungswert $U_2$ ist.

**4.** Verfahren nach einem der vorangehenden Ansprüche 2 oder 3, **dadurch gekennzeichnet, dass** In dem Haushaltsgerät (1) zwischen einem Prüfbetriebszustand bei einerwerkseitigen Prüfung des Haushaltsgeräts (1) und einem Normalbetriebszustand bei einer Benutzung des Haushaltsgeräts (1) durch einen Benutzer unterscheiden wird und der Verbraucher-Widerstandswert ($R_L$) nur während des Prüfbetriebszustands berechnet wird.

5. Verfahren nach einem der vorangehen Ansprüche 2 bis 4, **dadurch gekennzeichnet, dass** der berechnete Verbraucher-Widerstandwert ($R_L$) in dem Haushaltsgerät (1) dauerhaft gespeichert wird.

6. Netzgespeistes elektrisches Haushaltsgerät (1)

 - mit einem Verbraucher (3) mit einem Verbraucherwiderstand (13) und mit einem Verbraucher-Widerstandswert ($R_L$),
 - mit zwei Schaltungspunkten (10), zwischen denen im Betrieb eine Spannung zur elektrischen Versorgung des Verbrauchers (3) abgreifbar ist,
 - mit einer Sensorstufe (18) zum Abgreifen der Spannung und zum Bereitstellen eines Sensorsignals (19), das die Spannung repräsentiert,
 - mit einer Steuerstufe (22) zum Erzeugen eines Steuersignals (16) und zum Ermitteln eines Spannungswerts aus dem Sensorsignal (19),
 **gekennzeichnet durch**
 - eine Speicherstufe (23) zum Speichern des werkseitig bestimmten Verbraucher-Widerstandswert ($R_L$), und
 - eine Steuerstufe (22) zum Ermitteln eines aktuellen Spannungswerts bei ringeschaltetem Verbraucherstrom ($I_L$) und unter Verwendung des werkseitig bestimmten Verbraucher-Widerstandswerts ($R_L$) und des aktuellen Spannungswerts zum Berechnen der mit dem Verbraucher (3) erzielbaren Leistung.

7. Haushaltsgerät (1) nach Anspruch 6 mit einer Schaltstufe (14), mit der auf ein Steuersignal (16) hin der Verbraucherstrom ($I_L$) schaltbar ist, **dadurch gekennzeichnet, dass**

 - die Speicherstufe (23) einen Innenwiderstandswert ($R_I$) eines Innenwiderstands (12) einer externen Spannungsquelle (11) speichert, mit der die Spannung erzeugt wird, und dass
 - die Steuerstufe (22) zum Ermitteln eines ersten Spannungswerts ($U_1$) bei ausgeschaltetem Verbraucherstrom ($I_L$) und zum Ermitteln eines zweiten Spannungswerts ($U_2$) bei eingeschaltetem Verbraucherstrom ($I_L$) und zur Berechnung des Verbraucher-Widerstandswerts ($R_L$) aus dem ersten Spannungswert ($U_1$) und dem zweiten Spannungswert ($U_2$) und dem Innenwiderstandswert ($R_I$) ausgebildet ist.

**Claims**

1. Method for offsetting variations in voltage during operation of a mains-operated electrical household appliance (1) with a connection to a voltage source and with an electrical load (3), wherein during operation, when said load (3) is switched on, a current voltage value of the voltage source is determined, **characterised in that**, by using a load resistance value ($R_L$) which is defined individually by the manufacturer, the power of the load (3) achievable with the current voltage value is calculated.

2. Method for determining a behaviour of a load (3) with a load resistance (13) in an electrical household appliance (1) for defining a load resistance value ($R_L$), having the following steps:

 - tapping a voltage for supplying electricity to the load (3),
 - switching on and off a load current ($I_L$) which flows through the load resistance (13),
 - determining a voltage value of the voltage of a voltage source (11),

 **characterised in that**

 - an internal resistance ($R_I$) of the voltage source (11) is determined,
 - a first voltage value ($U_1$) is determined with the load current ($I_L$) switched off and a second voltage value ($U_2$) is determined with the load current ($I_L$) switched on, and
 - a load resistance value ($R_L$) of the load resistance (13) is calculated from the first voltage value ($U_1$), and the second voltage value ($U_2$) and the internal resistance value ($R_I$).

3. Method according to claim 2, **characterised in that** the load resistance value ($R_L$) is calculated according to the following equation

$$R_{I.} = \left(\frac{U_1 - dU}{dU}\right) R_I$$

wherein dU is a differential voltage value between the first voltage value $U_1$ and the second voltage value $U_2$.

4. Method according to one of the preceding claims 2 or 3, **characterised in that** in the household appliance (1) a distinction is made between a test operating state during testing of the household appliance (1) by the manufacturer and a normal operating state during usage of the household appliance (1) by a user and the load resistance value $(R_L)$ is only calculated during the test operating state.

5. Method according to one of the preceding claims 2 to 4, **characterised in that** the calculated load resistance value $(R_L)$ is permanently stored in the household appliance (1).

6. Mains-operated electrical household appliance (1)

- having a load (3) with a load resistance (13) and a load resistance value $(R_L)$,
- having two switching points (10), between which a voltage for supplying electricity to the load (3) can be tapped during operation,
- having a sensor stage (18) for tapping the voltage and for providing a sensor signal (19) which represents the voltage,
- having a control stage (22) for generating a control signal (16) and for determining a voltage value from the sensor signal (19),

**characterised by**

- a storage stage (23) for storing the load resistance value $(R_L)$ defined by the manufacturer and
- a control stage (22) for determining a current voltage value with the load current $(I_L)$ switched on and during use of the load resistance value $(R_L)$ defined by the manufacturer and the current voltage value for calculating the power achievable with the load (3).

7. Household appliance (1) according to claim 6 with a switching stage (14), enabling the load current $(I_L)$ to be switched in response to a control signal (16), **characterised in that**

- the storage stage (23) stores an internal resistance value $(R_I)$ of an internal resistance (12) of an external voltage source (11), with which the voltage is generated,

and that

- the control stage (22), for determining a first voltage value $(U_1)$ with the load current $(I_L)$ switched off and for determining a second voltage value $(U_2)$ with the load current $(I_L)$ switched on and for calculating the load resistance value $(R_L)$ is embodied from the first voltage value $(U_1)$ and the second voltage value $(U_2)$ and the internal resistance value $(R_I)$.

**Revendications**

1. Procédé destiné à compenser des fluctuations de tension lors du fonctionnement d'un appareil ménager électrique (1) alimenté par le réseau, comprenant une connexion à une source de tension et comprenant un consommateur électrique (3), une valeur de tension actuelle de la source de tension étant déterminée pendant le fonctionnement lorsque le consommateur (3) est en service, **caractérisé en ce que** la puissance du consommateur (3) pouvant être obtenue à l'aide de la valeur de tension actuelle est calculée en utilisant une valeur de résistance de consommateur $(R_L)$ déterminée individuellement en usine.

2. Procédé destiné à déterminer un comportement d'un consommateur (3) à l'aide d'une résistance de consommateur (13) dans un appareil ménager électrique (1) dans le but de déterminer une valeur de résistance de consommateur $(R_L)$, comprenant les étapes suivantes :

- saisie d'une tension destinée à l'alimentation électrique du consommateur (3),
- connexion et déconnexion d'un courant de consommateur ($I_L$) qui circule à travers la résistance de consommateur (13),
- détermination d'une valeur de tension de la tension d'une source de tension (11), **caractérisé en ce qu'**
- une résistance interne ($R_I$) de la source de tension (11) est déterminée,
- une première valeur de tension ($U_1$) est déterminée lorsque le courant de consommateur ($I_L$) est déconnecté et une deuxième valeur de tension ($U_2$) est déterminée lorsque le courant de consommateur ($I_L$) est connecté, et
- une valeur de résistance de consommateur ($R_L$) de la résistance de consommateur (13) est calculée à partir de la première valeur de tension ($U_1$) et de la deuxième valeur de tension ($U_2$) et de la valeur de résistance interne ($R_I$).

3. Procédé selon la revendication 2, **caractérisé en ce que** la valeur de résistance de consommateur ($R_L$) est calculée selon l'équation

$$R_L = \left( \frac{U_1 - dU}{dU} \right) R_J$$

dU étant une valeur de tension différentielle entre la première valeur de tension $U_1$ et la deuxième valeur de tension $U_2$.

4. Procédé selon l'une quelconque des revendications précédentes 2 ou 3, **caractérisé en ce que** dans l'appareil ménager (1) il est différencié entre un état de fonctionnement d'essai lors d'une vérification en usine de l'appareil ménager (1) et un état de fonctionnement normal lors d'une utilisation de l'appareil ménager (1) par un usager et **en ce que** la valeur de résistance de consommateur ($R_L$) est calculée seulement pendant l'état de fonctionnement d'essai.

5. Procédé selon l'une quelconque des revendications précédentes 2 à 4, **caractérisé en ce que** la valeur de résistance de consommateur ($R_L$) calculée est mémorisée de manière durable dans l'appareil ménager (1).

6. Appareil ménager électrique (1) alimenté par le réseau,

- comprenant un consommateur (3) ayant une résistance de consommateur (13) et une valeur de résistance de consommateur ($R_L$),
- comprenant deux points de commutation (10) entre lesquels une tension destinée à l'alimentation électrique du consommateur (3) peut être saisie pendant le fonctionnement,
- comprenant un étage de détection (18) pour saisir la tension et pour fournir un signal de détection (19) qui représente la tension,
- comprenant un étage de commande (22) pour générer un signal de commande (16) et pour déterminer une valeur de tension à partir du signal de détection (19),

**caractérisé par**

- un étage de mémorisation (23) pour mémoriser la valeur de résistance de consommateur ($R_L$) déterminée en usine, et
- un étage de commande (22) pour déterminer une valeur de tension actuelle lorsque le courant de consommateur ($I_L$) est connecté et en utilisant la valeur de résistance de consommateur ($R_L$) déterminée en usine et la valeur de tension actuelle pour calculer la puissance pouvant être obtenue avec le consommateur (3).

7. Appareil ménager (1) selon la revendication 6, comprenant un étage de commutation (14) au moyen duquel le courant de consommateur ($I_L$) est commutable suite à un signal de commande (16), **caractérisé en ce que**

- l'étage de mémorisation (23) mémorise une valeur de résistance interne ($R_I$) d'une résistance interne (12) d'une source de tension externe (11), avec laquelle la tension est produite,

et **en ce que**

- l'étage de commande (22) est réalisé pour déterminer une première valeur de tension ($U_1$) déterminée lorsque

le courant de consommateur ($I_L$) est déconnecté et pour déterminer une deuxième valeur de tension ($U_2$) lorsque le courant de consommateur ($I_L$) est connecté et pour calculer la valeur de résistance de consommateur ($R_L$) à partir de la première valeur de tension ($U_1$) et de deuxième valeur de tension ($U_2$) et de la valeur de résistance interne ($R_I$).

EP 2 538 826 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007002575 A1
- EP 2074916 A1